# EUROPÄISCHE PATENTSCHRIFT

(11) **EP 1 206 366 B1**
(45) Veröffentlichungstag und Bekanntmachung des Hinweises auf die Patenterteilung: **27.07.2005**
(21) Anmeldenummer: 01956407.9
(22) Anmeldetag: 28.07.2001
(51) Int. Cl.: B60K 41/02, F16H 61/04

(54) **VERFAHREN UND VORRICHTUNG ZUR ANTRIEBSSTRANGSTEUERUNG EINES KRAFTFAHRZEUGS WÄHREND GETRIEBESCHALTVORGÄNGEN**
METHOD AND DEVICE FOR CONTROLLING THE DRIVETRAIN OF A MOTOR VEHICLE DURING GEARSHIFT OPERATIONS
PROCEDE ET DISPOSITIF DE COMMANDE COORDONNEE DE L'ENSEMBLE TRANSMISSION D'UN VEHICULE LORS D'OPERATIONS DE CHANGEMENT DE RAPPORT

(30) Priorität: 10.08.2000 DE 10039084
(43) Veröffentlichungstag der Anmeldung: 22.05.2002
(73) Patentinhaber: Robert Bosch GmbH, 70422 Stuttgart (DE)
(72) Erfinder: LOEFFLER, Juergen, 71638 Ludwigsburg (DE)
(86) Internationale Anmeldenummer: PCT/DE2001/002868
(87) Internationale Veröffentlichungsnummer: WO 2002/012013

(56) Entgegenhaltungen:
- EP-A- 0 695 665
- WO-A-00/29244
- DE-A- 19 725 816
- DE-A- 19 937 455
- US-A- 5 427 215

## Beschreibung

### Stand der Technik

Die Erfindung betrifft ein Verfahren und Vorrichtung zur Antriebsstrangsteuerung eines Kraftfahrzeugs während Getriebeschaltvorgängen mit den Merkmalen der unabhängigen Ansprüche.

Bei Fahrzeugen mit einem automatisierten Schaltgetriebe und einer elektronisch betätigten Kupplung erfolgt ein automatisierter Gangwechsel durch Ansteuerung der Komponenten Verbrennungsmotor, Kupplung und Getriebe. Hierbei müssen diese Komponenten geeignet angesteuert werden, so dass der Gangwechsel möglichst schnell und dabei aber auch komfortabel erfolgt.

Für die Bestimmung des Soll-Getriebegangs sind Verfahren Stand der Technik, die bei der Gangermittlung neben den unmittelbaren Eingangsgrößen auch die Fahrsituation, den Fahrertyp und Betriebsbedingungen berücksichtigen. Hierzu sei beispielhaft auf die DE 196 25 935 A oder DE 197 03 863 A verwiesen.

Weiterhin sind Systeme zur koordinierten Antriebstrangsteuerung Stand der Technik. So beschreibt die DE 199 37 455 A ein System zur Steuerung der Aggregate bei Getriebeschaltvorgängen, das in ein System zur Antriebstrangsteuerung eingebettet ist.

Aus der US 5 427 215 ist ein Verfahren zur Steuerung von Servokupplung, Fahrzeugmotor und Getriebe während einer Getriebeübersetzungsänderung bekannt, bei dem für die Änderung der Getriebeübersetzung Verläufe für die Ausgangsdrehzahl des Fahrzeugmotors und die Kupplungsposition festgelegt werden und während der Getriebeübersetzungsänderung die Servokupplung und der Fahrzeugmotor so gesteuert werden, dass sie Zustände gemäß der festgelegten Verläufe annehmen.

Die Aufgabe der Erfindung besteht in der optimalen Ansteuerung der Aggregate des Antriebstrangs während Getriebeschaltvorgängen hinsichtlich Traktion und Komfort unter allen Betriebsbedingungen.

Diese Aufgabe wird durch die Merkmale der unabhängigen Ansprüche gelöst.

### Vorteile der Erfindung

Wie erwähnt betrifft die Erfindung die koordinierte Steuerung der im Antriebsstrang eines Kraftfahrzeugs angeordneten Elemente Servokupplung, Fahrzeugmotor und Getriebe während einer Änderung der Getriebeübersetzung. Für die Änderung der Getriebeübersetzung werden zeitliche Verläufe der Zustände der Ausgangsdrehzahl des Fahrzeugmotors und des Ausgangsmomentes der Servokupplung festgelegt. Die Steuerung der Servokupplung und des Fahrzeugmotors während der Änderung der Getriebeübersetzung geschieht dann derart, dass das Ausgangsmoment der Servokupplung und die Ausgangsdrehzahl des Fahrzeugmotors die festgelegten zeitlichen Verläufe annehmen.

Dadurch wird für den Schaltvorgang eine optimale Systemtrajektorie für die Zustände des Verbrennungsmotors und der Kupplung festgelegt und diese einer unterlagerten Steuerung und Regelung zugeführt. Die Bestimmung der optimalen Systemtrajektorie erfolgt dabei in Abhängigkeit von den Vorgaben eines übergeordneten Systems zur Antriebstrangsteuerung.

In einer besonders vorteilhaften Ausgestaltung der Erfindung ist vorgesehen, dass während des Fahrbetriebs des Fahrzeugs wenigstens
- ein das Verhalten des Fahrers des Fahrzeugs repräsentierender Fahrertypwert und/oder
- ein die momentane Fahrsituation repräsentierender Fahrsituationswert und/oder
- ein den Betriebszustand wenigstens eines Elements des Antriebsstrangs repräsentierender Betriebszustandswert und/oder
- ein wenigstens eine Betriebsbedingung wenigstens eines Elements des Antriebsstrangs repräsentierender Betriebsbedingungswert
ermittelt wird. Die zeitlichen Verläufe werden dann abhängig von wenigstens einem der ermittelten Werte festgelegt. Damit ist also erfindungsgemäß vorgesehen, die optimale Systemtrajektorie an die Fahrsituation, den Fahrertyp, Betriebsbedingungen der Aggregate und den Zustand der Aggregate selbst anzupassen.

Die Bestimmung der optimalen Systemtrajektorie erfolgt dabei vorzugsweise durch einen Echtzeit-Optimierungsalgorithmus, der während des Fahrbetriebs ausgeführt wird. Dies bedeutet, dass die zeitlichen Verläufe während des Fahrbetriebs ermittelt und aktualisiert werden. Zu Beginn einer Änderung der Getriebeübersetzung werden dann die jeweils aktuellen Verläufe als die Verläufe festgelegt, gemäß der die Steuerung der Servokupplung und des Fahrzeugmotors während der Änderung der Getriebeübersetzung geschieht.

Ergebnis dieses Algorithmus ist der Soll-Verlauf der Motordrehzahl und der Soll-Verlauf des Kupplungs-Ausgangsmoments. Das bedeutet, dass als Zustand des Fahrzeugmotors die Ausgangsdrehzahl des Fahrzeugmotors und als Zustand der Servokupplung das Ausgangsmoments der Servokupplung festgelegt werden.

Durch die Erfindung werden bei allen Betriebsbedingungen optimale Schaltvorgänge erreicht, die einen hohen Komfort mit geringem Traktionsverlust vereinen.

Weitere vorteilhafte Ausgestaltungen sind den Unteransprüchen zu entnehmen.

### Zeichnung

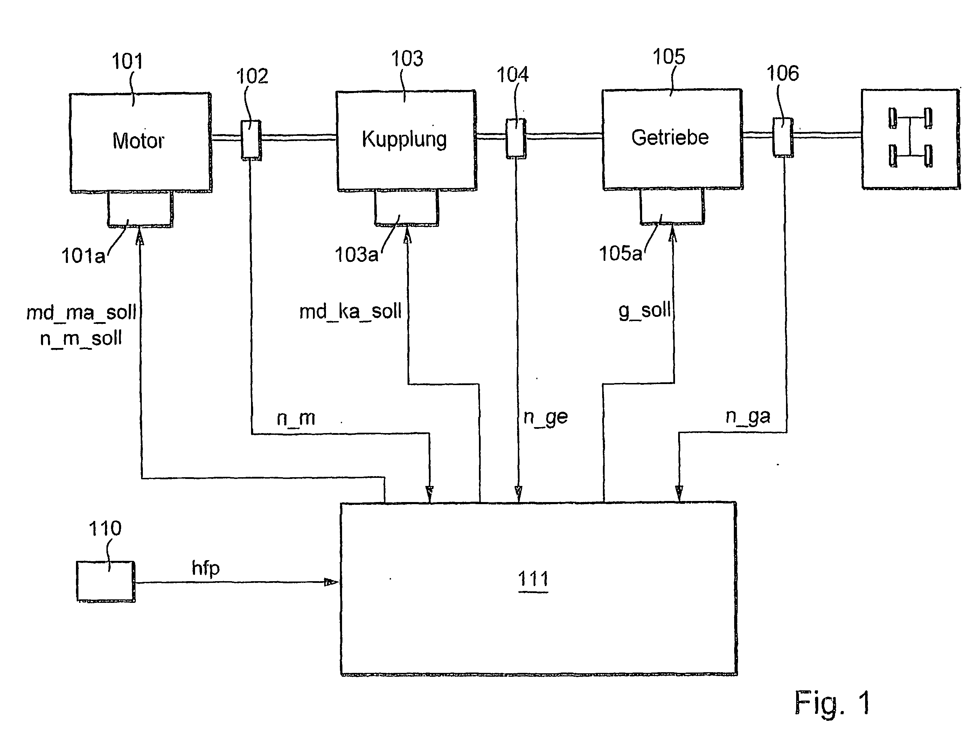

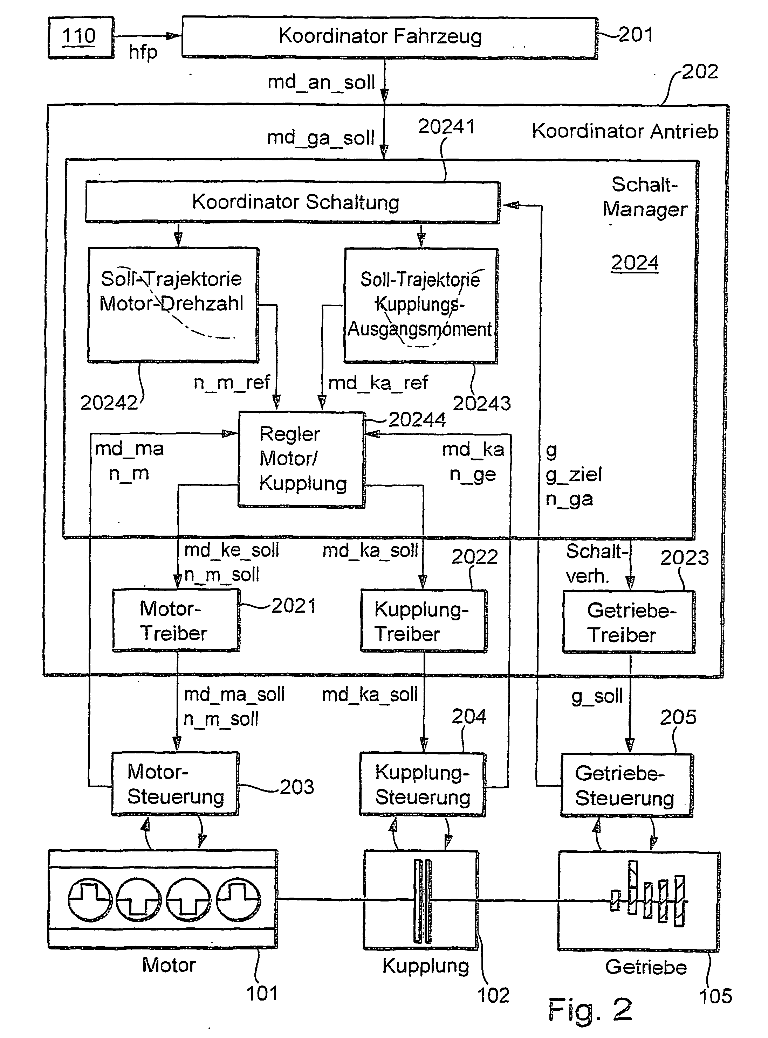

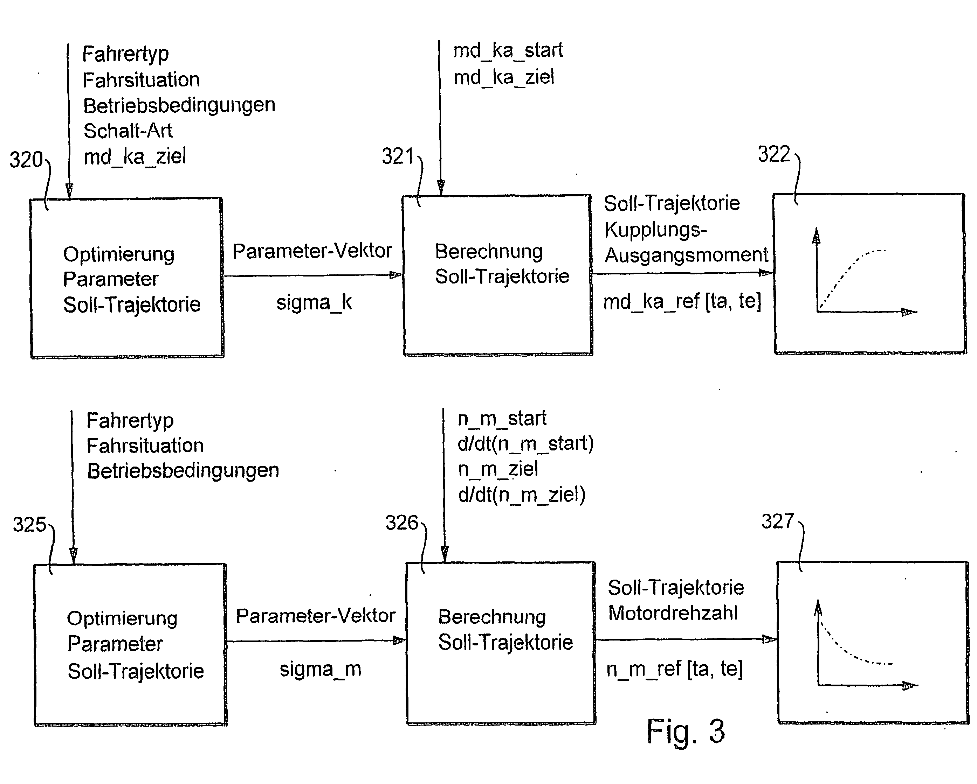

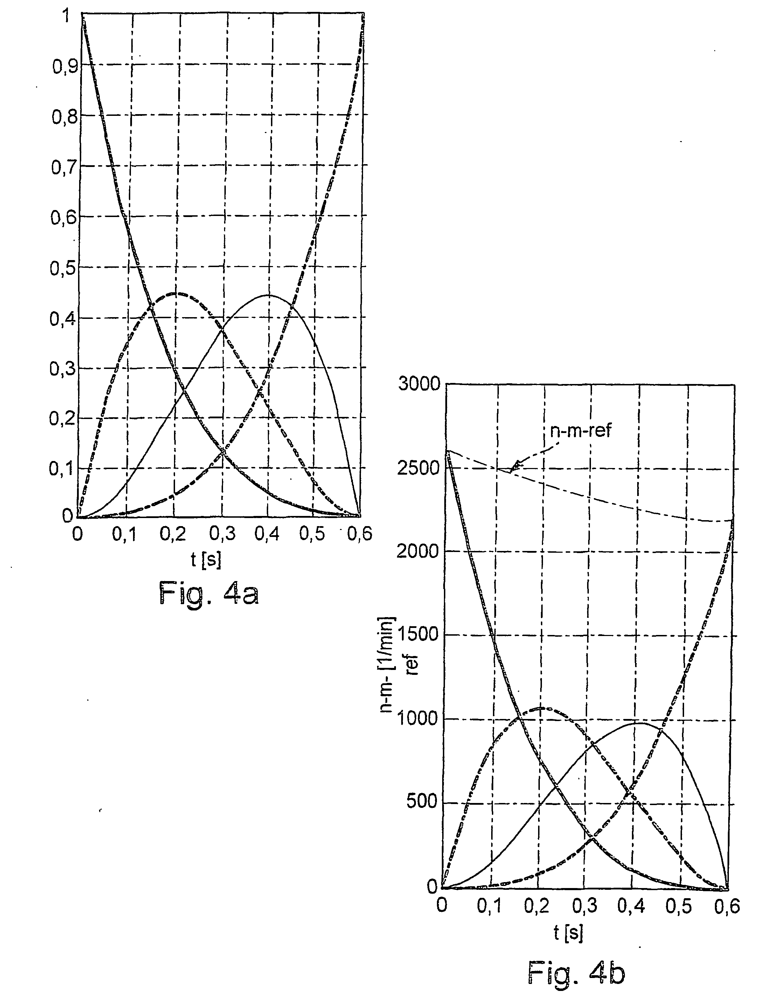

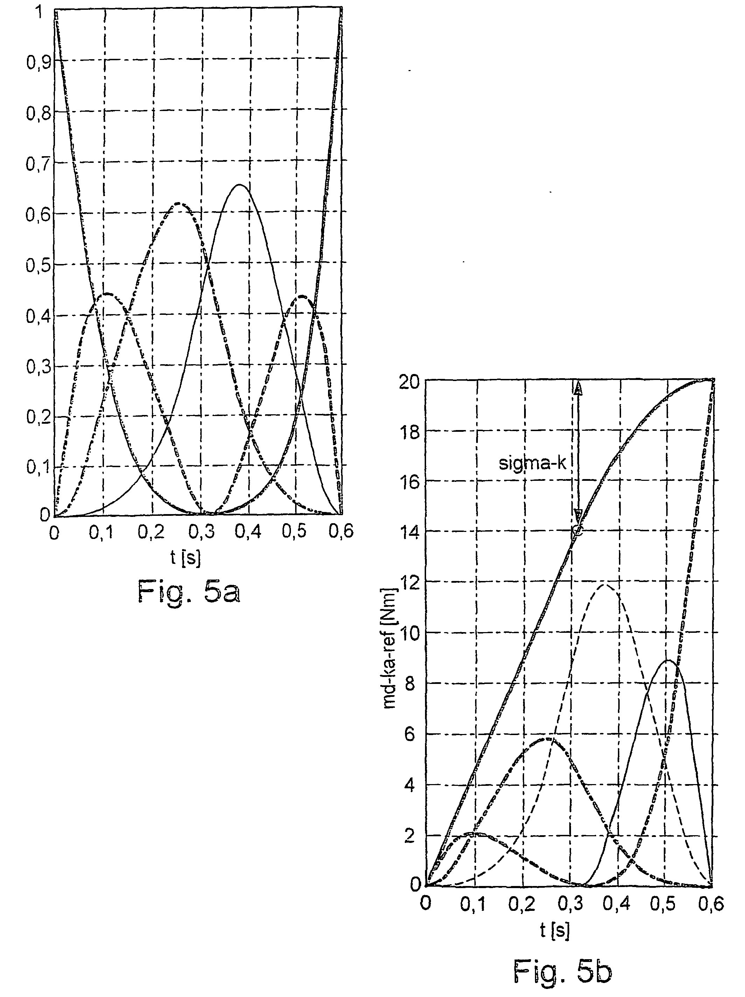

Die Figur 1 zeigt die Erfindung anhand eines Übersichtsblockschaltbildes, während die Figur 2 die Einbettung der Erfindung in ein System zur Antriebsstrangsteuerung darstellt. Die Figur 3 offenbart Details der Schaltungskoordination. Die Figuren 4a und 4b sowie 5a und 5b geben Beispiele für die erfindungsgemäße Ermittlung der zeitlichen Verläufe.

### Ausführungsbeispiel

Die Erfindung wird im folgenden anhand von Ausführungsbeispielen dargestellt.

Durch eine Antriebstrangsteuerung erfolgt der Gangwechsel bei einem Fahrzeug mit einem automatisierten Schaltgetriebe (ASG) und elektronisch betätigter Kupplung durch eine koordinierte Ansteuerung 111 der Komponenten Motor, Kupplung und Getriebe. Die Figur 1 zeigt die Systemarchitektur der Antriebstrangsteuerung.

Das vom Fahrer gewünschte Antriebsmoment wird durch die Antriebstrangsteuerung 111 in Abhängigkeit von der relativen Stellung hfp des Fahrpedals 110 und der der Fahrzeuggeschwindigkeit proportionalen Getriebeausgangsdrehzahl n_ga ermittelt. Von der Motorsteuerung 101a wird ein Motorausganosmoment md_ma_soll oder die Einstellung einer Motordrehzahl n_m_soll verlangt. Die Kupplungssteuerung 103a wird beauftragt, die Kupplung so einzustellen, dass diese ein Moment md_ka_soll übertragen kann. Alternativ kann auch die Vorgabe einer Soll-Lage oder einer Soll-Kraft des Aktuators, der die automatisierte Kupplung 103 betätigt, vorgesehen sein.

Das Getriebesteuergerät 105a wird vom Koordinator 111 beauftragt, den Soll-Getriebegang g_soll einzustellen.

Durch eine geeignete Sensorik 102, 104 und 106 werden die Motordrehzahl n_m, die Getriebeeingangsdrehzahl n_ge und die Getriebeausgangsdrehzahl n_ga erfaßt und der Antriebstrangsteuerung 111 zur Verfügung gestellt. Außerdem teilen die Steuerungskomponenten 101a, 103a und 105a der Antriebstrangsteuerung 111 weitere Signale mit, die im Zusammenhang mit der Funktionsstruktur der Antriebstrangsteuerung erläutert werden.

In der Figur 2 ist die Einbettung der Erfindung in ein System zur Antriebsstrangsteuerung dargestellt. In Abhängigkeit von der Fahrpedalstellung hfp und der der Fahrzeuggeschwindigkeit proportionalen Getriebeausgangsdrehzahl n_ga wird von einem Koordinator Fahrzeug 201 die Soll-Antriebsleistung md_an_soll bestimmt. Diese setzt der Koordinator Antrieb 202 durch Ansteuerung der Aggregate Motor 101, Kupplung 102 und Getriebe 105 um. Dazu gibt er der Motorsteuerung 203 das Soll-Motorausgangsmoment md_ma_soll bzw. die Soll-Motordrehzahl n_m_soll vor. Der Koordinator Antrieb 202 gibt weiterhin der Kupplungssteuerung 204 das Moment md_ka_soll vor, das die Kupplung 102 übertragen können soll. Der Getriebesteuerung 205 wird der Soll-Gang g_soll vorgegeben.

Jedem der Aggregate 101, 102 und 103 ist innerhalb des Koordinators Antrieb 202 ein Treiber (Motortreiber 2021, Kupplungstreiber 2022, Getriebetreiber 2023) zugeordnet. Die koordinierte Ansteuerung der Aggregate 101, 102 und 103 während Getriebeschaltvorgängen wird vom Schaltmanager 2024 vorgenommen, der Teil des Koordinators Antrieb 202 ist und den Treibern 2021, 2022 und 2023 während Schaltungen Soll-Größen vorgibt. Der Schaltmanager 2024 fordert vom Motortreiber 2021 ein Soll-Kupplungseingangsmoment md_ke_soll bzw. eine Soll-Motordrehzahl n_m_soll. Der Schaltmanager 2024 fordert weiterhin vom Kupplungstreiber 2022 die Einstellung eines Kupplungsmoments md_ka_soll und kann vom Getriebetreiber 2023 eine Schaltverhinderung verlangen.

Innerhalb des Schaltmanagers 2024 sorgt ein Regler Motor/Kupplung 20244 für die koordinierte Steuerung und Regelung von Motor 101 und Kupplung 102. Er erhält den Soll-Verlauf der Motordrehzahl n_m_ref von einem Block Soll-Trajektorie Motordrehzahl 20242. Er erhält weiterhin den Soll-Verlauf des Kupplungs-Ausgangsmoments md_ka_ref von einem Block Soll-Trajektorie Kupplungsausgangsmoment 20243. Ein Block Koordinator Schaltung 20241 ist für die Koordination der Vorgaben verantwortlich.

Die Figur 3 zeigt anhand eines Blockschaltbildes das Verfahren zur Ermittlung der Soll-Trajektorien 20242 und 20243 für das Kupplungs-Ausgangsmoment und die Motordrehzahl, das innerhalb des Rechenblocks Koordinator Schaltung 20241 realisiert ist.

Für die Ermittlung der Soll-Trajektorie für das Kupplungs-Ausgangsmoment md_ka_ref werden dem Block 320 (Optimierung Parameter Soll-Trajektorie) Informationen über den Fahrertyp, die Fahrsituation und Betriebsbedingungen sowie die Schalt-Art und der gewünschte Soll-Wert für das Kupplungs-Ausgangsmoment am Ende der Schaltphase md_ka_ziel zugeleitet. Die Schalt-Art liefert eine codierte Information über die Schaltung, z.B. 1-2 Zugschaltung (Wechsel vom ersten Getriebegang zum zweiten Getriebegang während der Motor das Fahrzeug antreibt), 4-3 Schubschaltung (Wechsel vom vierten Getriebegang zum dritten Getriebegang während die Fahrzeugrader den Motor antreiben). Diese Eingangsgrößen werden dem Block 320 vom Koordinator Schaltung 20241 bzw. von dem Koordinator Antrieb 202 zur Verfügung gestellt. Die Ermittlung von Werten, die den Fahrertyp (bspw. "sportlich" oder "economy"), die Fahrsituation (bspw. Bergfahrt, Winterbetrieb) und die Betriebsbedingungen der Aggregate (bspw. Temperatur des Motors und/oder der Kupplung) können in an sich bekannter Weise ermittelt werden.

Im Block 320 wird aus diesen Informationen ein Parameter-Vektor sigma_k bestimmt, der die Eigenschaften der Soll-Trajektorie md_ka_ref festlegt. Die Elemente des Vektors sigma_k beschreiben insbesondere die Form der Soll-Trajektorie md_ka_ref (zB rampenförmig, PT1-förmig, sinusartig) und ihre zeitliche Dauer (und damit das Zeitintervall [ta, te]). Die Abbildung der Eingangsinformationen des Blocks 320 auf den Parameter-Vektor sigma_k kann durch algebraische Rechenvorschriften, Kennlininen, Kennfelder, Fuzzy-Regeln oder neuronale Netze erfolgen, gegebenenfalls auch basierend auf einer Modellbeschreibung der Antriebsaggregate und des Fahrzeugs.

In dem Block 321 (Berechnung Soll-Trajektorie) wird die Soll-Trajektorie md_ka_ref berechnet. Ausgang des Blocks 321 ist eine Darstellung der Soll-Trajektorie als Kennlinie über dem Zeitintervall [ta, te]. Neben dem Parameter-Vektor sigma_k sind der Anfangswert des Kupplungs-Ausgangsmoments md_ka_start und der gewünschte Soll-Wert für das Kupplungs-Ausgangsmoment am Ende der Schaltphase md_ka_ziel Eingangsgrößen des Blocks 321.

Für die Ermittlung der Soll-Trajektorie für die Motordrehzahl n_m_ref werden dem Block 325 (Optimierung Parameter Soll-Trajektorie) Informationen über den Fahrertyp, die Fahrsituation und Betriebsbedingungen zugeleitet. Er bestimmt aus diesen Informationen einen Parameter-Vektor sigma_m, der Eigenschaften der Soll-Trajektorie n_m_ref festlegt. Die Elemente des Vektors sigma_m beschreiben insbesondere die Form der Soll-Trajektorie n_m_ref (bspw. rampenförmig, PT1-förmig, sinusartig). Die Abbildung der Eingangsinformationen des Blocks 325 auf den Parameter-Vektor sigma_m kann durch algebraische Rechenvorschriften, Kennlininen, Kennfelder, Fuzzy-Regeln oder neuronale Netze erfolgen, gegebenenfalls auch basierend auf einer Modellbeschreibung der Antriebsaggregate und des Fahrzeugs.

In dem Block 326 (Berechnung Soll-Trajektorie) wird die Soll-Trajektorie n_m_ref berechnet. Ausgang des Blocks 326 ist eine Darstellung der Soll-Trajektorie als Kennlinie über dem Zeitintervall [ta, te]. Neben dem Parameter-Vektor sigma_m sind der Anfangswert der Motordrehzahl n_m_start, der Gradient der Motordrehzahl d/dt(n_m_start), der Zielwert der Motordrehzahl n_m_ziel und deren Gradient d/dt(n_m_ziel) Eingangsgrößen des Blocks 326.

Die Berechnung der Soll-Trajektorien für das Kupplungs-Ausgangsmoment bzw. die Motordrehzahl in den Rechenblöcken 321 und 326 erfolgt unter Verwendung vordefinierter mathematischer Funktionen wie bspw. einer Rampen-, Exponential- oder Sinus-Funktion.

In einer vorteilhaften Ausgestaltung der Erfindung werden Spline-Funktionen herangezogen, um die Soll-Trajektorien für das Kupplungs-Ausgangsmoment bzw. die Motordrehzahl zu bestimmen. Beispielhaft ist die Beschreibung des Verlaufs der Motordrehzahl n_m_ref durch Spline-Funktionen in den Figuren 4a und 4b und die Beschreibung des Soll-Kupplungsausgangsmoments md_ka_ref durch Spline-Funktionen in den Figuren 5a und 5b dargestellt.

Für die Berechnung der Soll-Trajektorie für die Motordrehzahl in dem Block 326 werden in einem ersten Schritt die Anzahl der Spline-Basisfunktionen (B-Splines) und deren Ordnung sowie ihre Verteilung über das Zeitintervall [ta, te] festgelegt. Diese Festlegung erfolgt in Abhängigkeit vom Parameter-Vektor sigma_m. In der Figur 4a sind entsprechend 4 Basisfunktionen der Ordnung 4 abgebildet. Mit diesen Basisfunktionen wird der Soll-Verlauf der Motordrehzahl beschrieben, und zwar so, dass der Anfangswert der Motordrehzahl n_m_start, der Gradient der Motordrehzahl d/dt(n_m_start), der Zielwert der Motordrehzahl n_m_ziel und deren Gradient d/dt(n_m_ziel) befriedigt werden (Figur 4b). Dazu kommt ein Verfahren zur Spline-Interpolation zum Einsatz, das in der Literatur (de Boor. C.: A Practical Guide to Splines. Applied Mathematical Sciences, Vol. 27. Springer-Verlag, New York, 1978. Kapitel Spline Interpolation) beschrieben ist.

Für die Berechnung der Soll-Trajektorie für das Kupplungs-Ausgangsmoment in Block 321 werden in einem ersten Schritt die Anzahl der Spline-Basisfunktionen (B-Splines) und deren Ordnung sowie ihre Verteilung über das Zeitintervall [ta, te] festgelegt. Diese Festlegung erfolgt in Abhängigkeit vom Parameter-Vektor sigma_k. In dem Beispiel wurde durch den Parameter-Vektor sigma_k definiert, dass die ersten 70 % des Momentenaufbaus linear erfolgen sollen. In der Figur 5a sind entsprechend 6 Basisfuktionen der Ordnung 4 abgebildet. Mit diesen Basisfunktionen wird der Soll-Verlauf des Kupplungs-Ausgangsmoments beschrieben, und zwar so, dass das Moment ausgehend von einem Startwert md_ka_start den Zielwert md_ka_ziel erreicht (Figur 5b).

## Patentansprüche

1. Verfahren zur koordinierten Steuerung der im Antriebsstrang eines Kraftfahrzeugs angeordneten Elemente Servokupplung (103), Fahrzeugmotor (101) und Getriebe (105) während einer Änderung der Getriebeübersetzung, wobei für die Änderung der Getriebeübersetzung zeitliche Verläufe (20242, 20243) der Zustände des Fahrzeugmotors (101) und der Servokupplung (103) festgelegt werden und die Steuerung der Servokupplung (103) und des Fahrzeugmotors (101) während der Änderung der Getriebeübersetzung derart geschieht, dass die Servokupplung (103) und der Fahrzeugmotor (101) die Zustände gemäß der festgelegten zeitlichen Verläufe (20242, 20243) annehmen und als Zustand des Fahrzeugmotors (101) die Ausgangsdrehzahl (n_m) des Fahrzeugmotors festgelegt wird, **dadurch gekennzeichnet, dass** als Zustand der Servokupplung (103) das Ausgangsmoments (md_ka) der Servokupplung festgelegt wird.

2. Verfahren nach Anspruch 1, **dadurch gekennzeichnet, dass** während des Fahrbetriebs des Fahrzeugs wenigstens
- ein das Verhalten des Fahrers des Fahrzeugs repräsentierender Fahrertypwert und/oder
- ein die momentane Fahrsituation repräsentierender Fahrsituationswert und/oder
- ein den Betriebszustand wenigstens eines Elements des Antriebsstrangs repräsentierender Betriebszustandswert und/oder
- ein wenigstens eine Betriebsbedingung wenigstens eines Elements des Antriebsstrangs repräsentierender Betriebsbedingungswert
ermittelt wird und die zeitlichen Verläufe abhängig von wenigstens einem der ermittelten Werte festgelegt wird.

3. Verfahren nach Anspruch 1, **dadurch gekennzeichnet, dass** die zeitlichen Verläufe (20242, 20243) während des Fahrbetriebs ermittelt und aktualisiert werden und zu Beginn einer Änderung der Getriebeübersetzung die jeweils aktuellen Verläufe als die Verläufe festgelegt werden, gemäß der die Steuerung der Servokupplung (103) und des Fahrzeugmotors (101) während der Änderung der Getriebeübersetzung geschieht.

4. Verfahren nach Anspruch 3, **dadurch gekennzeichnet, dass** die zeitlichen Verläufe (20242, 20243) während des Fahrbetriebs durch einen Echtzeit-Optimierungsalgorithmus ermittelt werden.

5. Vorrichtung zur koordinierten Steuerung der im Antriebsstrang eines Kraftfahrzeugs angeordneten Elemente Servokupplung (103), Fahrzeugmotor (101) und Getriebe (105) während einer Änderung der Getriebeübersetzung, wobei Koordinationsmittel (20241) vorgesehen sind, mittels der für die Änderung der Getriebeübersetzung zeitliche Verläufe (20242, 20243) der Zustände des Fahrzeugmotors (101) und der Servokupplung (103) festgelegt werden und die Steuerung der Servokupplung (103) und des Fahrzeugmotors (101) während der Änderung der Getriebeübersetzung derart geschieht, dass die Servokupplung (103) und der Fahrzeugmotor (101) die Zustände gemäß der festgelegten zeitlichen Verläufe (20242, 20243) annehmen und als Zustand des Fahrzeugmotors (101) die Ausgangsdrehzahl (n_m) des Fahrzeugmotors festgelegt wird, **dadurch gekennzeichnet, dass** als Zustand der Servokupplung (103) das Ausgangsmoments (md_ka) der Servokupplung festgelegt wird.

6. Vorrichtung nach Anspruch 5, **dadurch gekennzeichnet, dass** während des Fahrbetriebs des Fahrzeugs wenigstens
- ein das Verhalten des Fahrers des Fahrzeugs repräsentierender Fahrertypwert und/oder
- ein die momentane Fahrsituation repräsentierender Fahrsituationswert und/oder
- ein den Betriebszustand wenigstens eines Elements des Antriebsstrangs repräsentierender Betriebszustandswert und/oder
- ein wenigstens eine Betriebsbedingung wenigstens eines Elements des Antriebsstrangs repräsentierender Betriebsbedingungswert
ermittelt wird und die zeitlichen Verläufe abhängig von wenigstens einem der ermittelten Werte festgelegt wird.

7. Vorrichtung nach Anspruch 5, **dadurch gekennzeichnet, dass** die zeitlichen Verläufe (20242, 20243) während des Fahrbetriebs ermittelt und aktualisiert werden und zu Beginn einer Änderung der Getriebeübersetzung die jeweils aktuellen Verläufe als die Verläufe festgelegt werden, gemäß der die Steuerung der Servokupplung (103) und des Fahrzeugmotors (101) während der Änderung der Getriebeübersetzung geschieht.

8. Vorrichtung nach Anspruch 5, **dadurch gekennzeichnet, dass** die zeitlichen Verläufe (20242, 20243) während des Fahrbetriebs durch einen Echtzeit-Optimierungsalgorithmus ermittelt werden.

## Claims

1. Method for the coordinated control of the elements arranged in the drive train of a motor vehicle, namely the servo clutch (103), vehicle engine (101) and transmission (105), during a change in the transmission ratio, time profiles (20242, 20243) of the states of the vehicle engine (101) and of the servo clutch (103) being defined for the change in the transmission ratio, and the control of the servo clutch (103) and of the vehicle engine (101) taking place during the change in the transmission ratio, in such a way that the servo clutch (103) and the vehicle engine (101) assume the states according to the defined time profiles (20242, 20243), and the state defined for the vehicle engine (101) is the output rotational speed (n_m) of the vehicle engine, **characterized in that** the state defined for the servo clutch (103) is the output torque (md_ka) of the servo clutch.

2. Method according to Claim 1, **characterized in that**, during the driving of the vehicle, at least
- a driver type value representing the behaviour of the driver of the vehicle and/or
- a driving situation value representing the instantaneous driving situation and/or
- an operating state value representing the operating state of at least one element of the drive train and/or
- an operating condition value representing at least one operating condition of at least one element of the drive train
are/is determined, and the time profiles are defined as a function of at least one of the determined values.

3. Method according to Claim 1, **characterized in that** the time profiles (20242, 20243) during driving are determined and updated, and, at the commencement of a change in the transmission ratio, the in each case current profiles are defined as the profiles according to which the control of the servo clutch (103) and of the vehicle engine (101) takes place during the change in the transmission ratio.

4. Method according to Claim 3, **characterized in that** the time profiles (20242, 20243) during driving are determined by means of a real-time optimization algorithm.

5. Device for the coordinated control of the elements arranged in the drive train of a motor vehicle, namely the servo clutch (103), vehicle engine (101) and transmission (105), during a change in the transmission ratio, coordination means (20241) being provided, by means of which time profiles (20242, 20243) of the states of the vehicle engine (101) and of the servo clutch (103) are defined for the change in transmission ratio, and the control of the servo clutch (103) and of the vehicle engine (101) takes place during the change in the transmission ratio, in such a way that the servo clutch (103) and the vehicle engine (101) assume the states according to the defined time profiles (20242, 20243) and the state defined for the vehicle engine (101) is the output rotational speed (n_m) of the vehicle engine, **characterized in that** the state defined for the servo clutch (103) is the output torque (md_ka) of the servo clutch.

6. Device according to Claim 5, **characterized in that**, during the driving of the vehicle, at least
- a driver type value representing the behaviour of the driver of the vehicle and/or
- a driving situation value representing the instantaneous driving situation and/or
- an operating state value representing the operating state of at least one element of the drive train and/or
- an operating condition value representing at least one operating condition of at least one element of the drive train
are/is determined, and the time profiles are defined as a function of at least one of the determined values.

7. Device according to Claim 5, **characterized in that** the time profiles (20242, 20243) during driving are determined and updated, and, at the commencement of a change in the transmission ratio, the in each case current profiles are defined as the profiles according to which the control of the servo clutch (103) and of the vehicle engine (101) takes place during the change in the transmission ratio.

8. Device according to Claim 5, **characterized in that** the time profiles (20242, 20243) during driving are determined by means of a real-time optimization algorithm.

## Revendications

1. Procédé de commande coordonnée des éléments d'une chaîne cinématique d'un véhicule automobile, à savoir l'embrayage asservi (103), le moteur du véhicule (101) et la boite de vitesses (105), pendant une modification du rapport de démultiplication de la boîte de vitesses, des tracés dans le temps (20242, 20243) des états du moteur du véhicule (101) et de l'embrayage (103) étant déterminés pour la modification du rapport de démultiplication de la boîte de vitesses, alors que la commande de l'embrayage (103) et du moteur du véhicule (101) pendant la modification du rapport de démultiplication de la boîte de vitesses s'effectue de telle sorte que l'embrayage (103) et le moteur du véhicule (101) adoptent les états conformes aux tracés déterminés dans le temps (20242, 20243), et en prenant le régime de sortie (n_m) du moteur du véhicule comme état du moteur du véhicule (101),
**caractérisé en ce que**
comme état de l'embrayage asservi (103) on prend le couple de sortie (md_ka) de l'embrayage.

2. Procédé selon la revendication 1,
**caractérisé en ce que**
pendant le mode de conduite du véhicule, on calcule au moins
- une valeur de type de conducteur représentant le comportement du conducteur du véhicule, et/ou
- une valeur de situation de conduite représentant la situation de conduite momentanée, et/ou
- une valeur d'état de fonctionnement représentant l'état de fonctionnement d'au moins un élément de la chaîne cinématique, et/ou
- une valeur de condition de fonctionnement représentant au moins une condition de fonctionnement d'au moins un élément de la chaîne cinématique,
et on détermine les tracés dans le temps en fonction d'au moins l'une des valeurs calculées.

3. Procédé selon la revendication 1,
**caractérisé en ce que**
les tracés dans le temps (20242, 20243) pendant le mode de conduite sont calculés et actualisés, et au début d'une modification du rapport de démultiplication de la boîte de vitesses, les tracés respectivement actuels sont déterminés comme les tracés selon lesquels s'effectue la commande de l'embrayage (103) et du moteur du véhicule (101) pendant la modification du rapport de démultiplication de la boîte de vitesses.

4. Procédé selon la revendication 3,
**caractérisé en ce que**
les tracés dans le temps (20242, 20243) pendant le mode de conduite sont calculés par un algorithme d'optimisation en temps réel.

5. Dispositif de commande coordonnée des éléments d'une chaîne cinématique d'un véhicule automobile, à savoir l'embrayage asservi (103), le moteur du véhicule (101) et la boîte de vitesses (105) pendant une modification du rapport de démultiplication de la boîte de vitesses, avec des moyens de coordination (20241) prévus pour déterminer les tracés dans le temps (20242, 20243) des états du moteur du véhicule (101) et de l'embrayage (103) pour la modification du rapport de démultiplication de la boîte de vitesses, alors que la commande de l'embrayage (103) et du moteur du véhicule (101) pendant la modification du rapport de démultiplication de la boîte de vitesses s'effectue de telle sorte que l'embrayage (103) et le moteur du véhicule (101) adoptent les états conformes aux tracés déterminés dans le temps (20242, 20243), et en prenant comme état du moteur du véhicule (101), le régime de sortie (n_m) du moteur du véhicule,
**caractérisé en ce que**
comme état de l'embrayage asservi (103), on prend le couple de sortie (md_ka) de l'embrayage.

6. Dispositif selon la revendication 5,
**caractérisé en ce que**
pendant le mode de conduite du véhicule, on calcule au moins
- une valeur de type de conducteur représentant le comportement du conducteur du véhicule, et/ou
- une valeur de situation de conduite représentant la situation de conduite momentanée, et/ou
- une valeur d'état de fonctionnement représentant l'état de fonctionnement d'au moins un élément de la chaîne cinématique, et/ou
- une valeur de condition de fonctionnement représentant au moins une condition de fonctionnement d'au moins un élément de la chaîne cinématique,
et on détermine les tracés dans le temps en fonction d'au moins l'une des valeurs calculées.

7. Dispositif selon la revendication 5,
**caractérisé en ce que**
les tracés dans le temps (20242, 20243) pendant le mode de conduite sont calculés et actualisés, et au début d'une modification du rapport de démultiplication de la boîte de vitesses, les tracés respectivement actuels sont déterminés comme les tracés selon lesquels s'effectue la commande de l'embrayage asservi (103) et du moteur du véhicule (101) pendant la modification du rapport de démultiplication de la boîte de vitesses.

8. Dispositif selon la revendication 5,
**caractérisé en ce que**
les tracés dans le temps (20242, 20243) pendant le mode de conduite sont calculés par un algorithme d'optimisation en temps réel.
